# FASCICULE DE BREVET EUROPEEN

(11) **EP 0 486 363 B1**
(45) Date de publication et mention de la délivrance du brevet: **31.01.1996**
(21) Numéro de dépôt: 91402987.1
(22) Date de dépôt: 07.11.1991
(51) Int. Cl.: G06K 7/06

(54) **Lecteur enregistreur de cartes à puce**
Leseeinrichtung und Recorder von Chipkarten
IC card reader and recorder

(30) Priorité: 16.11.1990 FR 9014288
(43) Date de publication de la demande: 20.05.1992
(73) Titulaire: THOMSON-CSF, F-75008 Paris (FR)
(72) Inventeur: Pocard, Claude, F-92045 Paris la Défense (FR); Serra, Bernard, F-92045 Paris la Défense (FR)
(74) Mandataire: Benoit, Monique

(56) Documents cités:
- EP-A- 0 237 883
- EP-A- 0 378 960
- WO-A-87/03979
- US-A- 4 794 236
- US-A- 4 904 853

## Description

La présente invention concerne les lecteurs enregistreurs de cartes à puce et leur interconnexion avec un terminal d'ordinateur à clavier et console écran.

Les cartes à puce également désignées "smart cards" ont généralement un format de carte de crédit et comportent un circuit électronique intégré sur une pastille de semi-conducteurs, à base de mémoires et/ou microprocesseur permettant de stocker des données.

Jusqu'à présent, lorsque l'on veut équiper d'un lecteur enregistreur de cartes à puce un terminal d'ordinateur non initialement prévu pour cela, on le fait par l'intermédiaire d'un port de connexion de périphérique éventuellement rajouté, et par une modification des programmes tournant sur l'ordinateur afin de prendre en compte la gestion du lecteur enregistreur de cartes à puce et du port de connexion de périphérique associé. Cela entraîne des modifications coûteuses des programmes et quelquefois du matériel même si, ce qui est souvent le cas, on ne désire utiliser le lecteur enregistreur de cartes à puce que pour rentrer dans l'ordinateur les données inscrites dans les cartes à puce afin d'éviter une saisie manuelle de ces données par l'intermédiaire d'un clavier ou pour modifier très succintement les données inscrites dans une carte à puce par exemple incrémenter ou décrémenter un compteur d'évènements.

Le document US-A-4 904 853 montre un lecteur enregistreur selon le préambule de la revendication 1.

La présente invention a pour but de résoudre ce problème et de permettre l'exploitation des données inscrites dans une carte à puce à l'aide d'un terminal d'ordinateur en remplaçant une saisie manuelle au clavier par une opération de lecture automatique sans pour autant nécessiter des modifications importantes du matériel ou des programmes.

Elle a pour objet un lecteur enregistreur de cartes à puce qui comporte une unité de gestion des opérations élémentaires de lecture et/ou d'inscription d'une carte à puce et qui est connectable à un terminal d'ordinateur comportant un clavier et une console écran reliés par une liaison de transmission, le clavier utilisant un code de transmission pour communiquer avec la console écran par la liaison de transmission. Outre son unité de gestion, ce lecteur enregistreur de cartes à puce comporte :
- des moyens de connexion en coupure sur la liaison de transmission afin que tout signal échangé entre le clavier et la console écran soit obligé de passer par le lecteur enregistreur ;
- des moyens de réception des messages du clavier transitant par la liaison de transmission à destination de la console écran ;
- des moyens d'émission de messages par la liaison de transmission à destination de la console écran ;
- des moyens de reconnaissance de messages identifiant parmi les messages reçus par les moyens de réception ceux destinés spécifiquement à l'unité de gestion pour déclencher des opérations de lecture ou d'écriture d'une carte à puce, orientant ces messages spécifiques vers l'unité de gestion et adressant les autres aux moyens d'émission pour qu'ils soient réorientés sans modification vers la console écran et ;
- des moyens encodeurs codant, selon le code utilisé par le clavier pour communiquer avec la console écran, les données résultant d'opérations de lecture de carte à puce entreprises par l'unité de gestion avant de les adresser aux moyens d'émission pour les transmettre à la console écran.

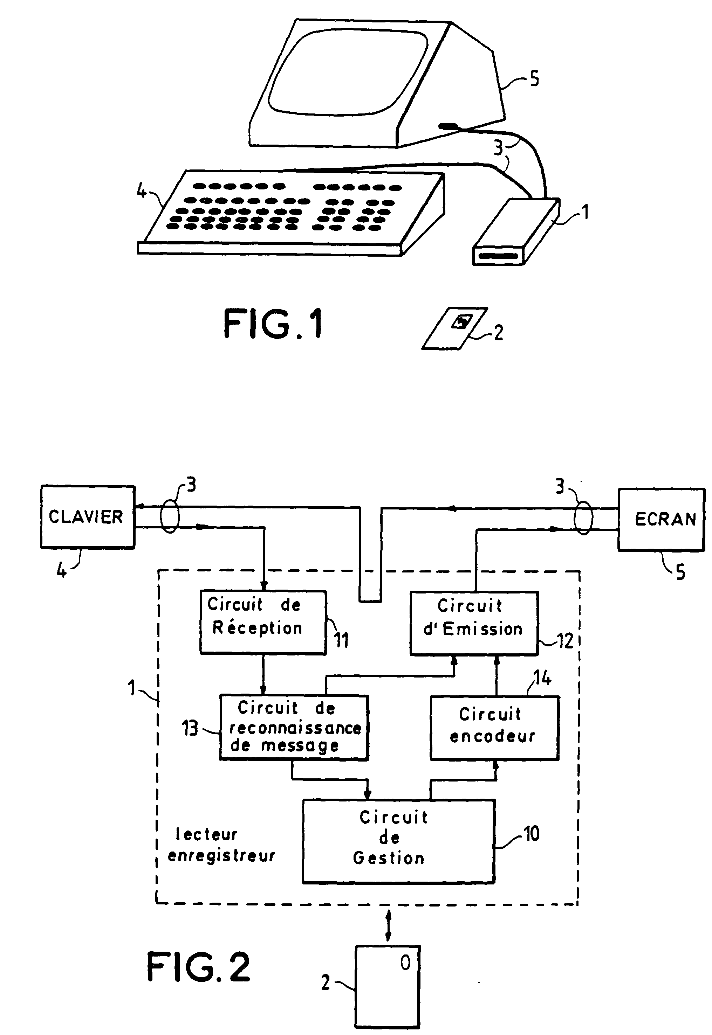

D'autres caractéristiques et avantages de l'invention ressortiront de la description d'un mode de réalisation donné à titre d'exemple. Cette description sera faite ci-après en référence au dessin dans lequel :
- une figure 1 représente, de manière schématique, en perspective, le mode de connexion d'un lecteur enregistreur de carte à puce selon l'invention sur un terminal d'ordinateur et,
- une figure 2 représente le schéma bloc d'un lecteur enregistreur de cartes à puce selon l'invention.

Le lecteur enregistreur de cartes à puce qui va être décrit permet principalement de substituer la lecture du contenu d'une carte à puce à la frappe des informations sur le clavier d'un terminal d'ordinateur afin de faciliter les opérations de saisie.

Comme représenté à la figure 1, le lecteur enregistreur 1 de carte à puce 2 est inséré en coupure sur la liaison filaire 3 reliant le clavier 4 et la console écran 5 d'un terminal informatique. Pour ce faire, il est pourvu de deux connecteurs, l'un raccordé à la partie de la liaison filaire provenant du clavier 4 et l'autre à la partie de la liaison filaire provenant de la console écran 5. Les éventuels conducteurs de la liaison filaire dédiés au sens de transmission ayant pour origine la console écran 5 et pour destination le clavier 4 sont simplement relayés au niveau du lecteur enregistreur 1 tandis que ceux dédiés au sens de transmission ayant pour origine le clavier 4 et pour destination la console écran 5 sont interfacés par les circuits du lecteur enregistreur 1.

Comme le montre la figure 2, le lecteur enregistreur 1 comporte, outre son circuit habituel de gestion 10 des opérations élémentaires de lecture et d'écriture d'une carte à puce, un circuit 11 de réception des messages du clavier 4, un circuit 12 d'émission de messages à destination de la console écran 5, un circuit 13 de reconnaissance de messages connecté en entrée au circuit 11 de réception de messages et en sortie au circuit de gestion 10 et au circuit 12 d'émission de messages, et un circuit encodeur 14 placé en interface entre le circuit de gestion 10 et le circuit 12 d'émission de messages.

Le circuit 11 de réception des messages du clavier est connecté en entrée à la partie de la liaison filaire 3 issue du clavier 4 et dédiée au sens de transmission provenant de ce dernier. Il détecte tous les messages émis par le clavier 4 à destination de la console écran 5.

Le circuit 12 d'émission de messages est connecté en sortie à la partie de la liaison filaire 3 issue de la console écran 5 et dédiée au sens de transmission à destination de cette dernière. Il émet à destination de la console écran 5 tous les messages qui lui sont confiés par le circuit 13 de reconnaissance de messages ou par le circuit encodeur 14.

Le circuit 13 de reconnaissance de messages sépare les messages reçus par le circuit de réception 11 en deux catégories : ceux spécifiques au lecteur enregistreur 1 qui sont transmis au circuit de gestion 10 et les autres qui sont transmis au circuit 12 d'émission de messages afin qu'ils soient réémis sans modification à destination de la console écran 5.

Le circuit encodeur 14 code les messages qui lui sont confiés par le circuit de gestion 10 selon le code de transmission utilisé par le clavier 4 pour communiquer avec la console écran 5.

Dans la pratique, le circuit de gestion 10 du lecteur enregistreur de cartes à puce 1 est un circuit à microprocesseur équipé d'une mémoire de programmation et d'interfaces d'entrée sortie réalisant les opérations élémentaires de lecture et d'écriture des cartes à puce. On profite de ce fait pour réaliser les circuits de réception et d'émission 11, 12 sous forme d'interfaces supplémentaires d'entrée et de sortie de ce microprocesseur et pour faire effectuer par ce microprocesseur les fonctions du circuit de reconnaissance de messages 13 et du circuit encodeur grâce à une programmation adaptée.

Le lecteur enregistreur de cartes à puce se substitue au clavier du terminal d'ordinateur dans le cadre de l'exécution par ce dernier d'un programme de saisie par le clavier de données destinées à renseigner des grilles d'informations affichées sur l'écran dès lors que ces données figurent dans une carte à puce. Pour ce faire, le lecteur enregistreur de cartes à puce, qui est normalement transparent aux messages envoyés par le clavier à la console écran, reconnaît une ou plusieurs commandes spécifiques dans les messages du clavier qui peuvent être soit des codes de touches de fonction soit des séquences de codes de touches inutilisées par le programme en cours d'exploitation. Sous l'action de ces commandes spécifiques il extrait les données voulues de la carte à puce et les présente à la console écran selon le code de transmission utilisé par le clavier. Son microprocesseur est programmé pour exécuter l'algorithme suivant :
- mise sous tension ;
- initialisation de la voie de transmission le reliant au clavier et à la console écran ;
- scrutation des messages provenant du clavier :
   . si un code ou une séquence de codes est reconnu comme une commande spécifique exécuter la commande,
   . sinon retransmettre les messages reçus à la console écran.

L'exécution d'une commande consiste à :
- acquérir les données voulues en provenance de la carte à puce,
- effectuer le tri des informations nécessaires,
- mettre en forme les données selon les grilles d'informations à renseigner,
- effectuer un transcodage selon le code utilisé par le clavier dans sa liaison avec la console écran et,
- émettre les données triées, mises en forme et transcodées à destination de la console écran.

Une commande spécifique du clavier peut également être utilisée pour faire fonctionner le lecteur enregistreur de cartes à puce en enregistreur par exemple pour incrémenter ou décrémenter un compteur d'évènements situé dans la carte à puce ou pour mettre à jour des données contenues dans cette dernière.

## Revendications

1. Lecteur enregistreur (1) de cartes à puce (2) comportant une unité de gestion (10) gérant l'ensemble des opérations élémentaires de lecture et/ou d'inscription d'une carte à puce, connectable à un terminal d'ordinateur comportant un clavier (4) et une console écran (5) reliés par une liaison de transmission (3), le clavier (4) utilisant un code de transmission pour communiquer avec la console écran (5) par la liaison de transmission (3), caractérisé en ce qu'il comporte en outre :
- des moyens de connexion en coupure sur la liaison de transmission (3) afin que tout signal échangé entre le clavier (4) et la console écran (5) soit obligé de passer par le lecteur enregistreur (1),
- des moyens (11) de réception des messages du clavier (4) transitant par la liaison de transmission (3) à destination de la console écran (5),
- des moyens (12) d'émission de messages par la liaison de transmission (3) à destination de la console écran (5),
- des moyens (13) de reconnaissance de messages identifiant parmi les messages reçus par les moyens de réception (11) ceux destinés spécifiquement à l'unité de gestion (10) pour déclencher des opérations de lecture et/ou d'écriture de carte à puce, orientant ces messages spécifiques vers l'unité de gestion (10) et adressant les autres aux moyens d'émission (12) pour qu'ils soient réorientés sans modification vers la console écran (5) et
- des moyens encodeurs (14) codant, selon le code utilisé par le clavier (4) pour communiquer avec la console écran (5), les données résultant d'une opération de lecture de carte à puce (2) par l'unité de gestion (10) avant de les adresser aux moyens d'émission (12) pour les transmettre à la console écran (5).

2. Lecteur enregistreur de cartes à puce selon la revendication 1 caractérisé en ce que l'unité de gestion (10) est équipée d'un microprocesseur pourvu d'une mémoire de programmation et d'interfaces d'entrée-sortie réalisant les opérations élémentaires de lecture et/ou d'écriture de carte à puce, que les moyens de réception (11) et d'émission (12) sont constitués par des circuits d'interface d'entrée sortie supplémentaires équipant ledit microprocesseur et en ce que les moyens de reconnaissance de messages (13) et les moyens encodeurs (14) sont constitués du microprocesseur lui-même spécialement programmé à cet effet.

## Patentansprüche

1. Lese-/Schreibvorrichtung (1) für Chipkarten (2), die eine Verwaltungseinheit (10), die sämtliche elementaren Lese- und/oder Schreibvorgänge für eine Chipkarte verwaltet, enthält und an ein Datenendgerät angeschlossen werden kann, das eine Tastatur (4) und ein Bildschirmgerät (5) enthält, die über eine Übertragungsverbindung (3) verbunden sind, wobei die Tastatur (4) einen Übertragungscode verwendet, um mit dem Bildschirmgerät (5) über die Übertragungsverbindung (3) Daten auszutauschen, dadurch gekennzeichnet, daß sie außerdem enthält:
- lösbare Anschlußmittel in der Übertragungsverbindung (3), damit jedes zwischen der Tastatur (4) und dem Bildschirmgerät (5) ausgetauschte Signal dazu gezwungen wird, durch die Lese-/Schreibvorrichtung (1) zu laufen,
- Mittel (11) zum Empfangen von Nachrichten von der Tastatur (4), die sich über die Übertragungsverbindung (3) in Richtung zum Bildschirmgerät (5) bewegen,
- Mittel (12) zum Senden von Nachrichten über die Übertragungsverbindung (3) in Richtung zum Bildschirmgerät (5),
- Mittel (13) zum Erkennen von Nachrichten, die von den von den Empfangsmitteln (11) empfangenen Nachrichten diejenigen identifizieren, die spezifisch für die Verwaltungseinheit (10) bestimmt sind, um Lese- und/oder Schreibvorgänge für die Chipkarte auszulösen, die diese besonderen Nachrichten zur Verwaltungseinheit (10) leiten und die die anderen Nachrichten zu den Sendemitteln (12) verweisen, damit sie unverändert zur Bildschirmeinheit (5) zurückgeleitet werden, und
- Codierungsmittel (14), die die Daten, die sich aus einem Lesevorgang der Chipkarte (2) durch die Verwaltungseinheit (10) ergeben, mit dem von der Tastatur (4) für die Kommunikation mit dem Bildschirmgerät (5) verwendeten Code codieren, bevor sie zu den Sendemitteln (12) geschickt werden, um sie zum Bildschirmgerät (5) zu übertragen.

2. Lese-/Schreibvorrichtung für Chipkarten nach Anspruch 1, dadurch gekennzeichnet, daß die Verwaltungseinheit (10) mit einem Mikroprozessor ausgerüstet ist, der mit einem Programmierungsspeicher sowie mit Eingangs-/Ausgangsschnittstellen versehen ist, die die elementaren Lese- und/oder Schreibvorgänge für die Chipkarte ausführen, daß die Empfangsmittel (11) und die Sendemittel (12) durch zusätzliche Eingangs-/Ausgangs-Schnittstellenschaltungen gebildet sind, die zum Mikroprozessor gehören, und daß die Nachrichtenerkennungsmittel (13) und die Codierungsmittel (14) vom Mikroprozessor selbst gebildet sind, der hierzu speziell programmiert ist.

## Claims

1. Reader-recorder (1) for smart cards (2), including a management unit (10) managing all the elementary operations of reading and/or writing to a smart card, which unit can be connected to a computer terminal including a keyboard (4) and a screen console (5) which are connected by a transmission link (3), the keyboard (4) using a transmission code for communicating with the screen console (5) via the transmission link (3), characterized in that it furthermore includes:
- connection means spliced into the transmission link (3) so that any signal exchanged between the keyboard (4) and the screen console (5) is obliged to pass through the reader-recorder (1),
- means (11) for receiving the messages from the keyboard (4) which are passing through the transmission link (3) and intended for the screen console (5),
- means (12) for transmitting messages intended for the screen console (5) via the transmission link (3),
- message recognition means (13) which identify, from the messages received by the reception means (11), those intended specifically for the management unit (10) in order to trigger the operations for reading and/or writing to the smart card, directing these specific messages to the management unit (10) and addressing the others to the transmission means (12) so that they are redirected to the screen console (5) without alteration,
- encoder means (14) encoding, using the code employed by the keyboard (4) for communicating with the screen console (5), the data resulting from an operation of reading the smart card (2) by means of the management unit (10), before addressing them to the transmission means (12) in order to send them to the screen console (5).

2. Reader-recorder for smart cards according to Claim 1, characterized in that the management unit (10) is equipped with a microprocessor provided with a programming memory and with input/output interfaces which perform the elementary operations of reading and/or writing to the smart card, that the reception (11) and transmission (12) means consist of additional input output interface circuits with which the said microprocessor is equipped, and in that the message recognition means (13) and the encoder means (14) are constituted by the microprocessor itself, which is specially programmed for this purpose.
